Europäisches Patentamt

European Patent Office

Office européen des brevets

(11) Publication number: **0 254 449**
**A2**

## (12) EUROPEAN PATENT APPLICATION

(21) Application number: 87305991.9

(22) Date of filing: 07.07.87

(51) Int. Cl.⁴: **B29C 47/00** , B29C 69/00

(30) Priority: 24.07.86 US 889672

(43) Date of publication of application:
27.01.88 Bulletin 88/04

(84) Designated Contracting States:
DE FR GB IT

(71) Applicant: **MINNESOTA MINING AND MANUFACTURING COMPANY**
**3M Center, P.O. Box 33427**
**St. Paul, Minnesota 55133-3427(US)**

(72) Inventor: **Vanden Bergh, Jan D. c/o Minnesota Mining and**
**Manufacturing Company 2501 Hudson Road**
**P.O. Box 33427 St. Paul Minnesota 55133(US)**

(74) Representative: **Baillie, Iain Cameron et al**
**c/o Ladas & Parry Isartorplatz 5**
**D-8000 München 2(DE)**

(54) Method for making hot melt adhesive rods.

(57) A method for producing a hot melt adhesive rod with substantially parallel sides, and a substantially uniform diameter throughout its length, comprising compounding a thermoplastic adhesive, heating the adhesive to a liquid state, providing a liquid quench bath having a specific gravity substantially equal to the specific gravity of the adhesive; drawing the adhesive through the quench bath at least until partially crystallized, and the rod thereby produced.

Xerox Copy Centre

## METHOD FOR MAKING HOT MELT ADHESIVE RODS

Technical Field

This invention relates to hot melt adhesive rods, and a method of making same. More particularly, it relates to a method of making adhesive rods which includes varying the density of the hot melt adhesive or the liquid quench bath to produce superior adhesive rods.

Background

Hot melt adhesives are thermoplastic resinous compositions, which are frequently produced in the form of cylindrical rods for use in hot melt applicator guns. The adhesive rod is placed in the chamber of a hot-melt gun and in use is pressed into contact with a surface heated sufficiently to convert the composition to the molten form. The molten composition is forced through an aperture by pressure applied to the opposite end of the unmelted rod. Thus, the molten adhesive is applied to the desired target.

A long standing unsolved problem in this art has been the inability to produce a perfectly dimensioned rod, i.e., one having parallel sides and a uniform diameter throughout the length of the rod. This problem was noted in U.S. Patent No. 4,090,643, filed September 17, 1976, (the '643 patent). The '643 patent notes that no matter how carefully the rods are extruded, when the rods cool deviations in the dimensions thereof will occur and the cooled rods will be out of round.

The '643 patent also notes the seriousness of this problem in operation of the adhesive gun applicator. As pressure is applied to the undersized or out-of-round rod to force the molten adhesive from the gun, molten adhesive is forced back along the side of the solid rod in the direction away from the heat source. This adhesive resolidifies between the rod and the chamber of the gun, resulting in increased resistance of the rod to movement, or in molten adhesive shooting from the rear of the gun endangering the safety of the operator. Deviations in diameter of more than 20 mils cause a great likelihood of these problems occurring.

Current manufacturing techniques extrude liquid adhesive into a cooling or quench bath containing a chilled liquid, usually water. The temperature of the quench bath is generally about 40°F. The adhesives generally have higher specific gravities than that of the quench bath, such that the effect of gravity on the liquid adhesive pulls the adhesive towards the bottom of the bath. To counteract the force of gravity, an increased force along the longitudinal axis of the cylindrical adhesive rod must be applied.

As the rod is pulled through the bath it solidifies to the partially crystallized, amorphous state. The axial force applied to the adhesive results in a change in molecular orientation. It is known in the art that polymers such as those used for thermoplastic adhesives have a tendency to return to their original molecular orientation after a force is released. Thus, after the amorphous adhesive passes out of the quench bath and is cut into segments, the adhesive rod distorts as it further crystallizes over the subsequent crystalization period, often at least 24 hours. The result is usually a rod which has a concave longitudinal cross-section, i.e., the ends of the rods have a greater diameter than the center, which is highly undesirable.

This problem is particularly acute in the case of adhesives which are slow to crystallize, thus generally having long open times. (Open time is a term used in the art which refers to the time it takes the molten adhesive to lose its adhesive characteristics after it is applied to a surface.) In manufacturing applications, long open times are crucial to allow time for surfaces to be pressed together after the adhesive is applied.

Disclosure of the Invention

A method has now been found to produce hot melt adhesive rods with substantially parallel sides and a uniform diameter throughout their length. The method comprises: compounding a thermoplastic adhesive; heating the adhesive to a liquid state; providing a liquid quench bath; drawing the adhesive through the quench bath until at least partially crystallized, wherein said quench bath and said adhesive have substantially equal specific gravities.

The substantially equal specific gravities of the bath and the adhesive can be accomplished by either adjusting the specific gravity of the quench bath or by adjusting the specific gravity of the adhesive. For example, the specific gravity of the adhesive can be lowered by adding a low density filler material, preferably hollow microspheres. In the alternative, the specific gravity of the adhesive can be raised by adding inert high density filler.

This invention also includes the hot melt adhesive rods produced by this method which have substantially parallel sides walls, a uniform diameter throughout their length, with the necessary amount of added filler such that the specific gravity of the adhesive equals that of the bath.

Detailed Description

The present invention provides a novel process for the manufacture of a rod of a hot melt adhesive which has substantially parallel side walls and has a uniform desired diameter throughout its lenth, typically 0.5 to 1.0 inch. The process includes compounding the ingredients of the hot melt adhesive and heating the adhesive to the liquid state. A liquid quench bath having a specific gravity substantially equal to the specific gravity of the adhesive is provided to cool the adhesive, resulting in conversion from liquid to solid. The bath is usually water at about 40°F, which has a specific gravity of about 1.0.

The specific gravity of the adhesive and the quench bath are adjusted to be substantially equal. Segmented polyesters are an example of a preferred adhesive, having long open times. The specific gravity of the water quench bath may be adjusted upward to equal that of the adhesive by adding, for example, sodium silicate. The preferred method, however, is to add low density filler material to the adhesive. Preferred low density fillers include hollow microspheres, particularly glass or inorganic silicate microspheres. This method is preferred because it reduces the amount of adhesive used, and thus the cost, without reducing the adhesive's strength.

A typical formulation of adhesive having a specific gravity of 1.0 using glass bubbles is as follows:

|  | Parts by Weight |
|---|---|
| Tackifier | 43.98 |
| Modifier | 8.76 |
| Stabilizer | 1.34 |
| Base resin | 43.96 |
| Glass bubbles, density, 0.230 | 1.96 |

The adhesive of the above formulation was tested against an adhesive having the same formulation except for the absence of glass bubbles. The results were as follows:

3

| | With Glass Bubbles | Without Glass Bubbles |
|---|---|---|
| Viscosity (centipoises) @ 350°F | 27,500 | 22,000 |
| @ 375°F | 17,675 | 14,800 |
| @ 450°F | 5,500 | 4,500 |
| Overlap Shear Bonds (lbs/sq.inch) fir/fir @ 75°F | 587 / 597 / 535 | 500-600 |
| crs/crs @ 75°F (cold rolled steel) | 535 / 575 | 450-550 |
| Impact Resistance (inch-lbs) 4 lbs. Hammer @ 75°F | 48 / 78 / 84 | 36-84 |
| 2 lbs. Hammer @ 0°F | 24 / 24 / 18 | 14-24 |
| Heat Resistance, 2 lb. dead load | 200°F / 200°F / 210°F | 210°F |
| 180° Peel Adhesion (lbs./inch width) @ 75°F Canvas to cold rolled steel | 31 / 31 | 27-33 |
| Polyvinylchloride (rigid) | 30 / 30 | |
| Polypropylene | 32 / 30 | |

In operation, the liquid adhesive, having the same specific gravity as the quench bath, is extruded into the quench bath. Because the adhesive and the bath have the same specific gravity the effect of the gravitational forces on the adhesive are equalled by the buoyancy force of the displaced quench bath. While the present invention would have utility for any desired shape of hot melt rod, it is preferred that the

4

aperture and rod by circular. With buoyancy equal to gravitational pull, there are no other significant forces acting on the adhesive and as such the force used to pull the rod through the bath can be substantially reduced. This greatly reduced force virtually eliminates the axial strain discussed above which leads to the deformation of the rod during crystallization.

The adhesive is drawn through the quench bath until at least partially crystallized. After the adhesive exits the quench bath it is cut into segments of the desired length for the particular gun application, typically two to three inches long. The preferred adhesives of the present invention, those having open times of greater than 2 minutes, often continue to crystallize for 24 hours or more. The rods of the present invention will not deform during this crystallization, instead they maintain substantially parallel side walls, with a uniform diameter throughout their lengths.

As has been illustrated, adhesive rods made by the method of the present invention, containing hollow spheres up to 30% by weight, exhibit substantially similar performance results to those made without hollow spheres. It has also been found that heavy inorganic fillers may be added with a counter-balancing amount of glass microspheres to attain the desired specific gravity. This greatly reduces cost while maintaining the benefits of the present invention and the desired adhesive properties. Filler may be added in amounts such that total solids, including bubbles is not greater than about 55%. In amounts greater than about 55% the open time becomes so short that applications of the adhesive are severely limited.

Other embodiments of this invention will be apparent to those skilled in the art from a consideration of this specification or practice of the invention disclosed herein. Various omissions, modifications and changes to the principles described herein may be made by one skilled in the art without departing from the true scope and spirit of the invention which is indicated by the following claims.

## Claims

1. A process for producing a hot melt adhesive rod having substantially parallel sides and a substantially uniform diameter throughout the length thereof comprising:
   1) compounding a hot melt adhesive;
   2) heating said adhesive to a liquid state;
   3) providing a liquid quench bath;
   4) extruding said adhesive in the liquid state into said quench bath wherein said quench bath and said adhesive have substantially equal specific gravities;
   5) drawing said adhesive through said quench bath until said adhesive is at least partially crystallized; and
   6) cutting said adhesive into rods of a desired length.

2. The process of claim 1 wherein said adhesive contains sufficient low density filler material to lower the specific gravity of said adhesive to be substantially equal to the specific gravity of said quench bath.

3. The process of claim 2 wherein said low density filler material is hollow microspheres.

4. The process of claim 3 wherein said hollow microspheres are inorganic silicate microspheres.

5. The process of claim 1 wherein said adhesive has a specific gravity of at least 1.0.

6. The process of claim 5 wherein said adhesive has an open time of at least 2 minutes.

7. The process of claim 6 wherein said adhesive comprises a segmented polyester.

8. The process of claim 1 wherein said quench bath is water.

9. The process of claim 1 wherein said quench bath has a specific gravity of at least 1.0.

10. The process of claim 9 wherein said quench bath comprises water with sodium silicate therein.

11. A thermoplastic adhesive rod having substantially parallel sides and a substantially uniform diameter throughout the length thereof; said rod comprising
   1) an adhesive having a specific gravity greater than 1.0; and
   2) sufficient hollow microspheres such that said rod has a specific gravity of about 1.0.

12. The rod of claim 11 wherein said microspheres are hollow, inorganic silicate microspheres.

13. The rod of claim 11 also including a high density filler material.

14. The rod of claim 13 wherein said high density filler material is an inorganic silicate.

15. The rod of claim 13 wherein said hollow microspheres and said high density filler comprises less than about 55 percent by weight thereof.

16. The rod of claim 11 wherein said adhesive has an open time greater than 2 minutes.